# EUROPEAN PATENT SPECIFICATION

(11) **EP 2 728 160 B1**
(45) Date of publication and mention of the grant of the patent: **22.03.2017**
(21) Application number: 13005190.7
(22) Date of filing: 04.11.2013
(51) Int. Cl.: F02M 55/02, F02M 55/00, F02M 69/46

(54) **Delivery pipe**
Förderrohr
Tuyau de distribution

(30) Priority: 05.11.2012 JP 2012243358
(43) Date of publication of application: 07.05.2014
(73) Proprietor: Otics Corporation, 444-0392 Aichi Nishio-shi (JP)
(72) Inventor: Isogai, Eiji, Nishio-shi, Aichi, 444-0392 (JP); Ota, Takayoshi, Nishio-shi, Aichi, 444-0392 (JP)
(74) Representative: Müller-Boré & Partner Patentanwälte PartG mbB

(56) References cited:
- EP-A2- 1 524 428
- JP-A- H1 122 575
- JP-A- 2006 336 487
- US-A- 5 022 372

## Description

### TECHNICAL

### FIELD

The present disclosure relates to a delivery pipe.

### BACKGROUND

A known fuel delivery pipe (hereinafter, referred to as a delivery pipe) used in an internal-combustion engine is configured to distribute fuel delivered from a fuel supply pipe to a fuel injection valve provided for each cylinder. The delivery pipe includes a pipe having a distribution hole that extends in a thickness direction thereof. The fuel injection valve is connected to the distribution hole via a connection member such as a valve attachment. With this configuration, the fuel is supplied to the fuel injection valve from the delivery pipe. A mounting member is attached to an outer surface of the pipe of the delivery pipe to fix the delivery pipe to the internal-combustion engine. Such a known delivery pipe is described in JP-A-2011-94520, for example.

US 5 022 372 A discloses a fuel delivery rail assembly for supplying fuel to a plurality of fuel injectors in an engine. The assembly includes an elongated conduit having a rectangular or square hollow section with a fuel passage therein and a plurality of sockets for making fluid communication between the conduit and the injectors.

JP 2006 336487 A discloses a fuel delivery pipe which includes a communication pipe having a flat flexible absorb face.

### SUMMARY

A technology described herein relates to a delivery pipe that includes a pipe integrally including at least one cylindrical tube section and at least one flat tube section, and a valve attachment including a hollow cylindrical portion having a hollow cylindrical shape and a connection portion having a planar shape. The flat tube section includes a planar attachment portion having a distribution hole extending through the planar attachment portion in a thickness direction thereof. The hollow cylindrical portion has a closed end closed by the connection portion and is configured to be attached to a fuel injection valve. The connection portion has an introduction hole that extends through the connection portion in a thickness direction thereof and communicates with the distribution hole of the planar attachment portion. The valve attachment is connected to the planar attachment portion at a position adjacent to one of edges of the planar attachment portion. The edges of the planar attachment portion extend along an axial direction of the pipe. The delivery pipe further includes a mounting member attached to an outer surface of the cylindrical tube section at a side corresponding to the one of the edges of the planar attachment portion. The mounting member is configured to maintain the cylindrical tube section in a fixed position. The mounting member has a cylindrical shape configured to extend in a direction parallel to the axial direction of the valve attachment.

In the above described delivery pipe, the connection portion of the valve attachment is connected to the planar attachment portion of the flat tube section at the position adjacent to one of the edges of the attachment portion. That is, the valve attachment is attached to the pipe at the offset position. In the above-described delivery pipe, the pipe and the valve attachment are connected at the attachment portion and the connection portion that are planar in shape. Accordingly, even if the valve attachment is attached to the pipe that includes the valve attachment at the offset position, the connection between the pipe and the valve attachment is not complex and the pipe and the valve attachment is tightly connected, and thus the strength of the pipe can be maintained.

In the above described delivery pipe, the mounting member is attached to the outer surface of the cylindrical tube section to fix the pipe. The mounting member is attached at the side that corresponds to the one of the edges of the planar attachment portion. With this configuration, even if a large stress is applied to a connection between the pipe and the valve attachment in a direction from the fuel injection valve to the pipe, the pipe is hardly pushed up at the connection in a direction opposite to the fuel injection valve. Accordingly, even if the fuel that is delivered through the delivery pipe is jetted from the fuel injection valve toward an engine, the strength of the pipe is maintained. In the above-described delivery pipe, the strength of the pipe is maintained while the valve attachment is attached to the pipe at the offset position.

In the above-described delivery pipe, the flat tube section may have a dimension in a direction perpendicular to the axial direction of the pipe along the attachment portion that is larger than a diameter of the cylindrical tube section such that the flat tube section has a protruding portion positioned outward of the outer surface of the cylindrical tube section. The protruding portion may overlap with at least a part of the mounting member in the axial direction of the pipe.

With this configuration, a space next to the outer surface of the cylindrical tube section that overlaps with the protruding portion of the flat tube section in the axial direction of the pipe can be used as a space for the mounting member. This makes an effective use of the space next to the pipe and saves the space required in the arrangement of the pipe to the engine.

In the above-described delivery pipe, the at least one cylindrical tube section may include a plurality of cylindrical tube sections and the at least one flat tube section may include a plurality of flat tube sections. The pipe may alternately include each of the cylindrical tube sections and each of the flat tube sections. The cylindrical tube sections and the flat tube sections may be coaxially arranged.

The valve attachment may be connected to the planar attachment portion at a position closer to the edge of the planar attachment portion than half of a dimension of the planer attachment portion in a direction perpendicular to the axial direction of the pipe.

The cylindrical tube section may have a circular cross-section taken along a line perpendicular to an axis thereof, and the flat tube section may have a rectangular cross-section taken along a line perpendicular to an axis thereof.

The delivery pipe may have a straight axis.

The introduction hole of the connection portion of the valve attachment may be positioned at substantially a center of the connection portion. The distribution hole of the planar attachment portion of the flat tube section may be positioned adjacent to the one of the edges of the planar attachment portion. The introduction hole and the distribution hole are coaxially arranged.

The distribution hole may have a diameter substantially equal to a diameter of the introduction hole.

The technology described herein provides the delivery pipe in which the valve attachment is connected to the pipe at the offset position and the strength of the delivery pipe is maintained.

### BRIEF DESCRIPTION OF THE DRAWINGS

FIG. 1 is a schematic perspective view illustrating a fuel supply unit 80 provided in an automobile 70.
FIG. 2 is a top plan view of the delivery pipe 10. The delivery pipe 10 is viewed from a side opposite to an engine 73.
FIG. 3 is a cross-sectional view of a part of the delivery pipe 10 taken along a line III-III in FIG. 2.
FIG. 4 is a partial cross-sectional view of a part of the delivery pipe 10 taken along a line IV-IV in FIG. 2.
FIG. 5 is a perspective view illustrating how the delivery pipe 10 is connected to a valve attachment 40.

### DETAILED DESCRIPTION

The delivery pipes are configured to be used for various internal-combustion engines. For example, a delivery pipe has a configuration in which a valve attachment is attached to an outer surface of a pipe at a position away from an axis of the pipe in relation to an upper surface of a head portion of an engine to which the delivery pipe is attached. That is, the delivery pipe is arranged at an offset position.

When the fuel that is delivered through the delivery pipe is jetted from the fuel injection valve toward an engine, a reaction force may lead a large stress in a direction from the fuel injection valve to the pipe of the delivery pipe. In the delivery pipe to which the valve attachment is attached at the offset position, the large stress is applied to a connection portion at which the valve attachment is connected, if the pipe thereof is not fixed at a side corresponding to a side at which the valve attachment is attached to the pipe. Thus, the connection portion is pushed up to a side opposite to the fuel injection valve. The pipe may not withstand the stress. That is, the delivery pipe to which the valve attachment is attached at the offset position may have a lower strength.

Further, if a surface of the pipe that faces the engine is a curved surface and the curved surface is connected to the valve attachment at the offset position as in the known delivery pipe, the pipe and the valve attachment are required to be connected to each other at their curved surfaces facing each other. However, it is difficult to make the both curved surfaces to have the same curvature, and thus the curved surfaces are connected less tightly and a connection therebetween becomes complex compared to a case in which planar surfaces are connected to each other. Accordingly, the connection may be easily deformed by heat, and thus the strength of the pipe is less likely to be maintained.

The present technology has been made in view of the aforementioned circumstances. The technology disclosed herein provides a fuel delivery pipe in which the valve attachment is connected to the pipe at the offset position and the strength of the pipe is maintained.

### (Configuration of Fuel Supply System for Automobile)

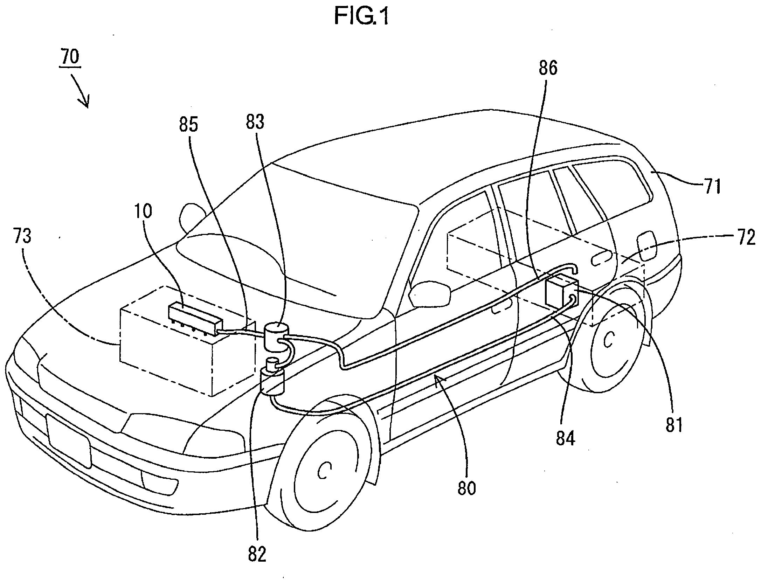

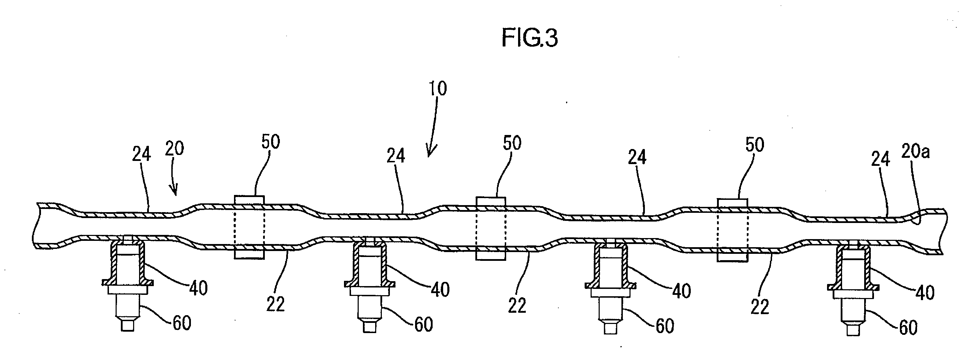

An embodiment will be described with reference to the drawings. As illustrated in FIG. 1, a fuel supply system 80 according to the embodiment is mounted in a vehicle body 71 of an automobile 70. The fuel supply system 80 is configured to supply fuel in a fuel tank 72 to an engine 73. The fuel may be gasoline, a high alcohol content fuel, or a mixture of gasoline and alcohol. The alcohol may be methanol, ethanol, butanol, or propanol. The engine 73 of this embodiment may be a direct-injection engine in which the fuel is jetted from a fuel injection valve 60 (see FIG. 3) toward the engine 73 with high pressure (for example, 20 MPa).

As illustrated in FIG. 1, the fuel supply system 80 includes a fuel supply pump 81, a filter 82, a pressure adjuster 83, a fuel delivery tube 84, and a fuel supply tube 85, a fuel return tube 86, and a delivery pipe 10. The fuel in the fuel tank 72 is pressurized by the fuel supply pump 81 and then transferred to the filter 82 through the fuel transfer tube 84. The fuel is filtered by the filter 82 and then delivered to the pressure adjuster 83.

The pressure adjuster 83 is configured to adjust the pressure of the fuel to be supplied to the fuel supply tube 85. The fuel transferred to the fuel supply tube 85 is sent to the delivery pipe 10 that is connected to the fuel supply tube 85. Then, the fuel in the delivery pipe 10 is delivered to fuel injection valves 60 (see FIG. 3). Then, anon-off valve of each fuel injection valve 60 is opened so that the fuel is jetted to cylinders in the engine 73 through pipes (not illustrated) that are connected to the fuel injection valves 60.

### (Configuration of Delivery Pipe)

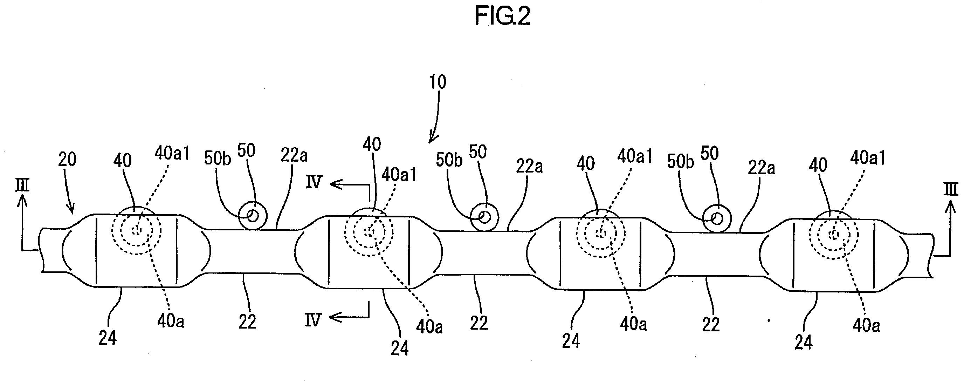

A right to left direction in FIG. 2 corresponds to a right to left direction of the delivery pipe 10 and an upper to lower direction in FIG. 2 corresponds to a front to back direction of the delivery pipe 10. An upper to lower direction in FIG. 3 corresponds to an upper to lower direction of the delivery pipe 10. Directions referred hereinafter are based on the directions defined above. As illustrated in FIG. 2, the delivery pipe 10 has an elongated tubular shape and is arranged in a horizontal position. The delivery pipe 10 is arranged in a vehicle so as to extend in the right to left direction, i.e. , in a vehicle width direction. The delivery pipe 10 includes a pipe 20 as a main pipe, valve attachments 40, and mounting bosses 50 (an example of a mounting member) that are attached to an outer surface of the pipe 20.

### (Pipe)

The pipe 20 has an elongated tubular shape and is arranged in a horizontal position. The pipe 20 is arranged in a vehicle so as to extend in the right to left direction, i.e., in the vehicle width direction, for example. The pipe 20 has a main bore 20a extending through the pipe 20 along an axis thereof. The pipe 20 is made of stainless or iron, for example.

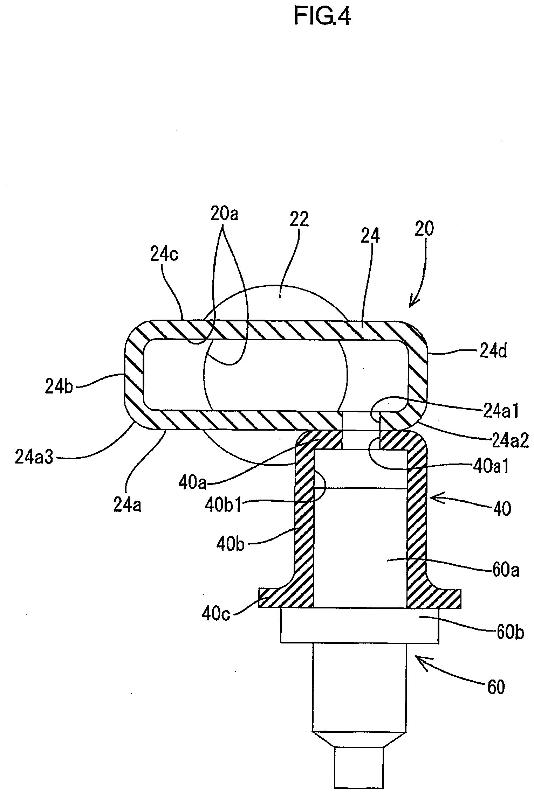

As illustrated in FIG. 2 and FIG. 3, the pipe 20 of the delivery pipe 10 includes circular tube sections 22 and rectangular tube sections 24. The circular tube section 22 is an example of the cylindrical tube section and the rectangular tube section 24 is an example of the flat tube section. The circular tube sections 22 and the rectangular tube sections 24 are alternately arranged in an axial direction of the pipe 20 (the right to left direction in FIG. 2 and FIG. 3). The circular tube sections 22 each have a circular cross-section taken along a line perpendicular to the axis of the pipe 20. The rectangular tube sections 24 each have a rectangular cross-section taken along a line perpendicular to the axial direction of the pipe 20 (see FIG. 4). As illustrated in FIG. 4, a long-side direction of the rectangular cross-section corresponds to the front to back direction. The circular tube sections 22 and the rectangular tube sections 24 are coaxially arranged. The main bore 20a of the pipe 20 is defined by bores of the circular tube sections 22 and bores of the rectangular tube sections 24 that communicate with each other.

As illustrated in FIG. 2, the circular tube sections 22 are equally spaced apart from each other and the rectangular tube sections 24 are equally spaced apart from each other. The pipe 20 having the above-described configuration is obtained by pressing parts of a hollow cylindrical tube such that the pressed parts become the rectangular tube sections 24. In the production of the pipe 20, the rectangular tube sections 24 are made to be coaxial with the circular tube sections 22, and the rectangular tube sections 24 and the circular tube sections 22 are alternately arranged.

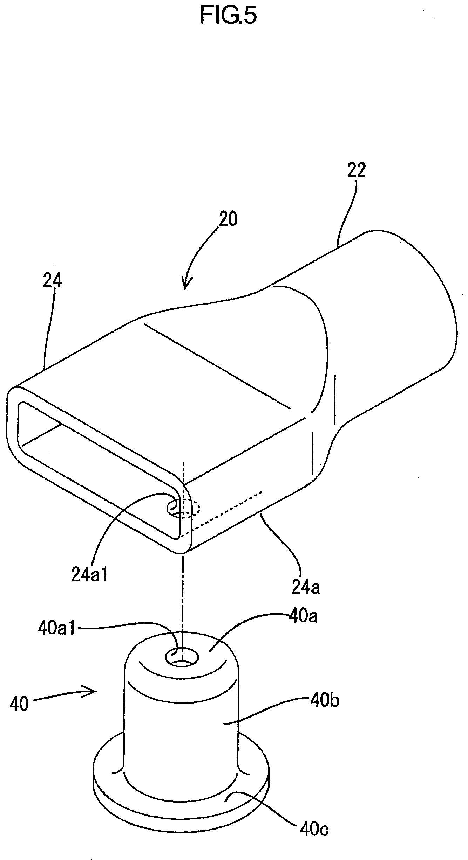

As illustrated in FIG. 4, the rectangular tube sections 24 included in the pipe 20 each have a lower planar portion 24a (hereinafter, referred to as an attachment portion 24a), a front planar portion 24b, an upper planar portion 24c, and a rear planar portion 24d. The attachment portion 24a that is positioned at a lower side of the rectangular tube section 24 includes a distribution hole 24a1 extending therethrough. The attachment portion 24a includes front and rear edges 24a3, 24a2 that extend along the axial direction of the pipe 20. The distribution hole 24a1 is positioned adjacent to one of the front and rear edges 24a3, 24a2, here, the rear edge 24a2 (the right side in FIG. 4). Specifically, the distribution hole 24a1 is positioned closer to the edge 24a2 of the attachment portion 24a than half of a dimension of the attachment portion 24a in a direction perpendicular to the axial direction of the pipe 20. As illustrated in FIG. 5, the distribution hole 24a1 has a circular opening.

As illustrated in FIG. 4, the rectangular tube section 24 of the pipe 20 has a horizontally-long rectangular cross-section taken along a line perpendicular to the axis thereof. As illustrated in FIG. 2 and FIG. 4, the rectangular tube section 24 of the pipe 20 is larger than the circular tube section 22 thereof in the front to rear direction of the pipe 20, i.e. , in the direction perpendicular to the axial direction of the pipe. That is, each edge portion of the rectangular tube section 24 in the front to rear direction is a protruding portion that is positioned outward of the outer surface of the circular tube section 22.

### (Valve Attachment)

As illustrated in FIG. 4, the valve attachment 40 has a cylindrical shape elongated in the upper to lower direction. The valve attachment 40 is made of steel or stainless, for example. The valve attachment 40 includes a hollow cylindrical portion 40b, a connection portion 40a having a circular plate shape, and a flange 40c. The hollow cylindrical portion 40b has a closed end closed with the connection portion 40a. The hollow cylindrical portion 40b extends in the upper to lower direction, i.e., extends substantially perpendicular to an axial direction of the pipe 20. The flange 40c extends outwardly a little from a lower end of the cylindrical portion 40b over an entire circumference thereof. The cylindrical portion 40b has an attachment bore 40b1 that extends along its axis. To the attachment bore 40b1, the fuel injection valve 60 is attached. The fuel injection valve 60 includes a cylindrical engagement portion 60a and an overhanging portion 60b. The overhanging portion 60b is provided at a lower end of the engagement portion 60a over the entire circumference thereof so as to protrude outward a little from the engagement portion 60a. The valve attachment 40 is fitted to the fuel injection valve 60 such that the attachment hole 40b1 receives the engagement portion 60a until an upper surface of the overhanging portion 60b is in contact with a lower surface of the flange 40c of the valve attachment 40 (See FIG. 4).

The connection portion 40a includes a circular introduction hole 40a1 that extends therethrough in the upper to lower direction, i.e., in a thickness direction thereof. The introduction hole 40a1 is positioned at substantially the center of a plate surface of the connection portion 40a. The introduction hole 40a1 is continuous from the attachment hole 40b1 of the cylindrical portion 40b. The valve attachment 40 is connected to the rectangular tube section 24 of the pipe 20 such that the connection portion 40a is in plane contact with the attachment portion 24a of the rectangular tube section 24. The connection portion 40a is arranged adjacent to the rear edge 24a2 of the attachment portion 24a that is positioned at the rear side and extends along the axial direction of the pipe 20. Further, the connection portion 40a is arranged such that the introduction hole 40a1 thereof overlaps with the distribution hole 24a1 that extends through the attachment portion 24a, and thus the introduction hole 40a1 communicates with the distribution hole 24a1 of the attachment portion 24a (see FIG. 4). Since the distribution hole 24a is positioned adjacent to the rear edge 24a2 of the attachment portion 24a, the connection portion 40a is connected to the attachment portion 24a at a position adj acent to the rear edge 24a2. The attachment portion 24a of the rectangular tube section 24 is connected to the connection portion 40a of the valve attachment 40 by welding or brazing.

### (Mounting boss)

As illustrated in FIG. 2 and FIG. 3, the mounting bosses 50 each have a cylindrical shape that extends in the upper to lower direction, i.e., in a direction parallel to the axial direction of the valve attachment 40. As illustrated in FIG. 2, the mounting bosses 50 are each attached to an outer surface of each circular tube section 22 on a rear side. More specifically described, the mounting member is attached to the outer surface of the circular tube section 22 at a side 22a corresponding to the side at which the valve attachment 40 is connected to the rectangular tube section 24. The circular tube section 22 and the mounting boss 50 are connected with each other by welding or blazing. Thus, the pipe 20 is fixed to the mounting boss 50.

The mounting bosses 50 each have a boss hole 50b extending therethrough along its axis. A fixture such as a bolt is inserted into the boss hole 50b. Then, the fixture is inserted and fixed to a fixation hole (not illustrated) provided in the head portion of the engine 73. Accordingly, the delivery pipe 10 is fixed to the head portion of the engine 73 via the mounting bosses 50.

According to the present embodiment, as illustrated in FIG. 2, each rectangular tube section 24 includes the protruding portions that are positioned outward of the outer surface of the circular tube sections 22 in the front to rear direction. The mounting bosses 50 are arranged so as to overlap with the protruding portions of the rectangular tube sections 24 in the axial direction of the pipe 20 (the right to left direction).

### (Connection Method of Valve Attachment)

A connection method of the valve attachment 40 and the pipe 20 will be described with reference to FIG. 5. Initially, the valve attachment 40 is positioned such that the introduction hole 40a1 thereof communicates with the distribution hole 24a1 of the attachment portion 24a of the rectangular tube section 24. Then, the valve attachment 40 is brought in contact with the attachment portion 24a. Since the distribution hole 24a1 is positioned adjacent to the rear edge 24a2 of the attachment portion 24a, the introduction hole 40a1 is positioned closer to the rear edge 24a2 in relation to the center of the main bore 20a. The attachment portion 24a of the rectangular tube section 24 included in the pipe 20 and the connection portion 40a of the valve attachment 40 are connected to each other at planar surfaces thereof, and thus the attachment portion 24a and the connection portion 40a are in plane contact with each other without any gap therebetween.

Then, a welding or brazing is performed at a contact point between the attachment portion 24a and the connection portion 40a to connect them. As a result, the introduction hole 40a1 and the attachment hole 40b1 of the valve attachment 40 communicate with the main bore 20a and the distribution hole 24a1 of the pipe 20, and thus the fuel can be supplied from the pipe bore 20 to the fuel injection valve 60.

As described above, in the delivery pipe 10 according to the present embodiment, the connection portion 40a of the valve attachment 40 is connected to the attachment portion 24a of the flat tube section 24 at the position adjacent to one of the edges 24a3, 24a2 of the attachment portion 24a, i.e., the edge 24a2 on the rear side. That is, the valve attachment 40 is attached to the pipe 20 at the offset position. In the delivery pipe 10 according to the present embodiment, the pipe 20 and the valve attachment 40 are in plane contact at the attachment portion 24a and the connection portion 40a that have planar shape. Accordingly, even if the valve attachment 40 is attached to the pipe 20 at the offset position in accordance with the offset arrangement of the pipe 20 to the engine, the connection between the pipe 20 and the valve attachment 40 is not complex, and the pipe 20 and the valve attachment 40 is tightly connected. Thus, the strength of the pipe 20 can be maintained.

Further, in the delivery pipe 10 according to the present embodiment, the mounting bosses 50 are each attached to the outer surface of the circular tube section 22 to fix the pipe 20 (the circular tube section 22). The mounting bosses 50 are each attached at the side 22a of the circular tube section 22 that corresponds to the side at which the valve attachment 40 is connected to the rectangular tube section 24. Accordingly, even if a large stress is applied in a connection between the pipe 20 and the valve attachment 40 in a direction from the fuel injection valve 60 to the pipe 20, the pipe 20 is hardly pushed up at the connection in a direction opposite to the fuel injection valve 60 (in an upper direction). Even if the fuel that is delivered through the delivery pipe 10 is jetted from the fuel injection valve 60 toward the engine 73, the strength of the pipe 20 is maintained. In the above-described delivery pipe 10, the strength of the pipe 20 is maintained while the valve attachment 40 is attached to the pipe 20 at the offset position.

In the delivery pipe 10 according to the present embodiment, the rectangular tube section 24 has the dimension larger than the diameter of the circular tube section 22 such that the rectangular tube section 24 has the protruding portion that is positioned outward of the outer surface of the circular tube section 22. The dimension is measured in the direction perpendicular to the axial direction of the pipe 20 along the attachment portion 24a. The protruding portion overlaps with at least a part of the mounting boss 50 in the axial direction of the pipe 20 (the right to left direction). With this configuration, a space next to the outer surface of the circular tube section 22 that overlaps with the protruding portion of the rectangular tube section 24 in the axial direction of the pipe 20 can be used as a space for the mounting boss 50. This makes an effective use of the space next to the pipe 20 and saves the space required in the arrangement of the pipe 20 to the engine.

In the delivery pipe 10 according to the present embodiment, the parts of the hollow cylindrical tube are pressed to obtain the rectangular tube sections 24. Accordingly, the pipe 20 integrally includes the rectangular tube sections 24 and the circular tube sections 22 without seam. Further, the pipe 20 integrally including the circular tube sections 22 and the flat tube sections 24 that are coaxially arranged can be easily produced. Due to the pressing process in the production process of the delivery pipe 10, the pipe 20 that integrally includes the circular tube sections 22 and the rectangular tube sections 24 coaxially arranged with smooth connection can be easily produced. In addition, the hollow cylindrical tube is pressed to obtain the rectangular tube sections 24 and the circular tube sections 22 that are alternately arranged. Accordingly, the rectangular tube sections 24 each have the protruding portion that is positioned outward of the outer surface of the circular tube section 22. Thus, a space where the mounting boss 50 is arranged can be provided between the adjacent rectangular tube sections 24. The mounting bosses 50 can be arranged between adjacent rectangular tube sections 24 each of which is connected to the valve attachment 40. With this configuration, the pipe 20 can be properly fixed by the mounting bosses 50.

### <Other Embodiments>

The present invention is not limited to the embodiments as described above with reference to the drawings. For example, the present invention may include following embodiments.
(1) According to the above-described present embodiment, the distribution hole 24a1 in the pipe 20 is positioned adjacent to the rear edge 24a2 of the attachment portion 24a. However, the distribution hole 24a1 and the introduction hole 40a1 may be positioned at any position and may have any shape as long as the distribution hole 24a1 and the introduction hole 40a1 communicate with each other and the connection portion 40a is connected to the attachment portion 24a at a position adjacent to one of edges of the attachment portion 24a.
(2) According to the above embodiment, the connection portion 40a of the valve attachment 40 is connected to the attachment portion 24a of the rectangular tube section 24 included in the pipe 20 at the position adjacent to the rear edge 24a2 of the attachment portion 24a. However, the connection portion 40a of the valve attachment 40 may be connected to the attachment portion 24a at a position adjacent to the front edge 24a3. In such a case, the mounting boss 50 may be attached to the circular tube section 22 of the pipe 20 at a front side thereof.
(3) According to the above embodiment, the pipe 20 is arranged in a vehicle so as to extend in the right to left direction, i.e., in the width direction of the vehicle. However, the pipe 20 may be arranged in a vehicle so as to extend in the front to rear direction, i.e., in a longitudinal direction of the vehicle. In such a case, the connection portion 40a of the valve attachment 40 may be connected to the attachment portion 24a of the rectangular tube section 24 of the pipe 20 at a position adjacent to either one of right and left edges of the attachment portion 24a. The mounting boss 50 may be attached to the circular tube section 22 at either one of right and left sides.
(4) According to the above embodiment, adjacent circular tube sections 22 are equally spaced apart from each other and adjacent rectangular tube sections 24 are equally spaced apart from each other. However, the adjacent circular tube sections 22 may not be equally spaced apart from each other and the rectangular tube sections 24 may not be equally spaced apart from each other.
(5) The connection portion 40a and the pipe 20 may be connected in a different manner from the above embodiment and the mounting boss 50 and the pipe 20 may be connected in a different manner from the above embodiment.
(6) In the above embodiment, the pipe 20 includes the rectangular tube section 24 that has a rectangular cross-section taken along a line perpendicular to the axis of the pipe 20. However, the rectangular tube section 24 may have any shape in cross section as long as the planar attachment portion 24a is included. The cross section may be substantially oval shape or any quadrangular shape.

The embodiment is explained in detail above for illustrative propose only, and it is to be understood that the claims are not limited by the forgoing description. The technology described in the claims includes the various modifications of the embodiments described above.

The technology described in the above description and the drawings can achieve more than one object at the same time, and the technical utility of the technology can be recognized when the technology achieves one of the objects.

### EXPLANATION OF SYMBOLS

10: delivery pipe, 20: pipe, 20a: main bore, 22: circular tube section 22n, 24: rectangular tube section 24a: attachment portion, 24a1: distribution hole, 24a2: edge of the attachment portion, 40: valve attachment, 40a: connection portion, 40a1: introduction hole, 50: mounting boss, 60: fuel injection valve

## Claims

1. A delivery pipe (10) comprising:
a pipe (20) integrally including at least one cylindrical tube section (22) and at least one flat tube section (24), the flat tube section (24) including a planar attachment portion (24a) having a distribution hole (24a1) extending through the planar attachment portion (24a) in a thickness direction thereof; and
a valve attachment (40) including a hollow cylindrical portion (40b) having a hollow cylindrical shape and a connection portion (40a) having a planar shape, the hollow cylindrical portion (40b) having a closed end closed by the connection portion (40a) and being configured to be attached to a fuel injection valve (60), the connection portion (40a) having an introduction hole (40a1) that extends through the connection portion (40a) in a thickness direction thereof and communicates with the distribution hole (24a1) of the planar attachment portion (24a), the valve attachment (40) being connected to the planar attachment portion (24a) of the flat tube section (24) at a position adjacent to either one of edges (24a2, 24a3) of the planar attachment portion (24a), the edges (24a2, 24a3) of the planar attachment portion (24a) extending along an axial direction of the pipe (20);
**characterized by**
a mounting member (50) attached to an outer surface of the cylindrical tube section (22) at a side corresponding to the one of the edges (24a2, 24a3) of the planar attachment portion (24a) adjacent to which the valve attachment (40) is connected, the mounting member (50) being configured to maintain the cylindrical tube section (22) in a fixed position,
wherein
the mounting member (50) has a cylindrical shape configured to extend in a direction parallel to the axial direction of the valve attachment (40).

2. The delivery pipe (10) according to claim 1, wherein
the flat tube section (24) has a dimension in a direction perpendicular to the axial direction of the pipe (20) along the attachment portion (24a) that is larger than a diameter of the cylindrical tube section (22) such that the flat tube section (24) has a protruding portion positioned outward of the outer surface of the cylindrical tube section (22), and
the protruding portion overlaps with at least a part of the mounting member (50) in the axial direction of the pipe (20).

3. The delivery pipe (10) according to claim 1 or 2, wherein
the at least one cylindrical tube section (22) includes a plurality of cylindrical tube sections (22) and the at least one flat tube section (24) includes a plurality of flat tube sections (24),
the pipe (20) alternately includes each of the cylindrical tube sections (22) and each of the flat tube sections (24), and
the cylindrical tube sections (22) and the flat tube sections (24) are coaxially arranged.

4. The delivery pipe (10) according to any one of claims 1 to 3, wherein the valve attachment (40) is connected to the planar attachment portion (24a) at a position closer to the one of the edges (24a2, 24a3) of the planar attachment portion (24a) than half of a dimension of the planar attachment portion (24a) in a direction perpendicular to the axial direction of the pipe (20).

5. The delivery pipe (10) according to any one of claims 1 to 4, wherein
the cylindrical tube section (22) has a circular cross-section taken along a line perpendicular to an axis thereof, and
the flat tube section (24) has a rectangular cross-section taken along a line perpendicular to an axis thereof.

6. The delivery pipe (10) according to any one of claims 1 to 5, wherein the delivery pipe (10) has a straight axis.

7. The delivery pipe (10) according to any one of claims 1 to 6, wherein
the introduction hole (40a1) of the connection portion (40a) of the valve attachment (40) is positioned at substantially a center of the connection portion (40a), the distribution hole (24a1) of the planar attachment portion (24a) of the flat tube section (24) is positioned adjacent to the one of the edges (24a2, 24a3) of the planar attachment portion (24a), and
the introduction hole (40a1) and the distribution hole (24a1) are coaxially arranged.

8. The delivery pipe (10) according to any one of claims 1 to 7, wherein the distribution hole (24a1) has a diameter substantially equal to a diameter of the introduction hole (40a1).

## Patentansprüche

1. Abgaberohrleitung (10), die umfasst:
eine Rohrleitung (20), die wenigstens einen zylindrischen Rohrabschnitt (22) und wenigstens einen Flachrohrabschnitt (24) umfasst, wobei der Flachrohrabschnitt (24) einen planaren Befestigungsabschnitt (24a) mit einem Verteilungsloch (24a1), das sich in seiner Dickenrichtung durch den planaren Befestigungsabschnitt (24a) erstreckt, umfasst; und
eine Ventilbefestigung (40), die einen hohlen zylindrischen Abschnitt (40b) mit einer hohlen zylindrischen Form und einen Verbindungsabschnitt (40a) mit einer planaren Form umfasst, wobei der hohle zylindrische Abschnitt (40b) ein geschlossenes Ende hat, das von dem Verbindungsabschnitt (40a) geschlossen wird, und aufgebaut ist, um an einem Brennstoffeinspritzventil (60) befestigt zu werden, wobei der Verbindungsabschnitt (40a) ein Einleitungsloch (40a1) hat, das sich in dessen Dickenrichtung durch den Verbindungsabschnitt (40a) erstreckt und mit dem Verteilungsloch (24a1) des planaren Befestigungsabschnitts (24a) in Verbindung steht, wobei die Ventilbefestigung (40) an einer Position benachbart zu einem der Ränder (24a2, 24a3) des planaren Befestigungsabschnitts (24a) mit dem planaren Befestigungsabschnitt (24a) des Flachrohrabschnitts (24) verbunden ist, wobei die Ränder (24a2, 24a3) des planaren Befestigungsabschnitts (24a) sich entlang einer Axialrichtung der Rohrleitung (20) erstrecken;
**gekennzeichnet durch**
ein Montageelement (50), das an einer Außenoberfläche des zylindrischen Rohrabschnitts (22) auf einer Seite befestigt ist, die einem der Ränder (24a2, 24a3) des planaren Befestigungsabschnitts (24a) entspricht, benachbart zu demdas Ventilbefestigungselement (40) verbunden ist, wobei das Montageelement (50) aufgebaut ist, um den zylindrischen Rohrabschnitt (22) in einer festen Position zu halten,
wobei das Montageelement (50) eine zylindrische Form hat, die aufgebaut ist, um sich in einer Richtung parallel zu der Axialrichtung der Ventilbefestigung (40) zu erstrecken.

2. Abgaberohrleitung (10) nach Anspruch 1, wobei
der Flachrohrabschnitt (24) eine Abmessung in einer Richtung senkrecht zu der Axialrichtung der Rohrleitung (20) entlang des Befestigungsabschnitts (24a) hat, die größer als ein Durchmesser des zylindrischen Rohrabschnitts (22) ist, so dass der Flachrohrabschnitt (24) einen vorstehenden Abschnitt hat, der auswärts von der Außenfläche des zylindrischen Rohrabschnitts (22) ist, und
der vorstehende Abschnitt wenigstens einen Teil des Montageelements (50) in der Axialrichtung der Rohrleitung (20) überlappt.

3. Abgaberohrleitung (10) nach Anspruch 1 oder 2, wobei
der wenigstens eine zylindrische Rohrabschnitt (22) eine Vielzahl von zylindrischen Rohrabschnitten (22) umfasst und der wenigstens eine Flachrohrabschnitt (24) eine Vielzahl von Flachrohrabschnitten (24) umfasst,
die Rohrleitung (20) jeden der zylindrischen Rohrabschnitte und jeden der Flachrohrabschnitte (24) abwechselnd umfasst, und
die zylindrischen Rohrabschnitte (22) und die Flachrohrabschnitte (24) koaxial angeordnet sind.

4. Abgaberohrleitung (10) nach einem der Ansprüche 1 bis 3, wobei die Ventilbefestigung (40) an einer Position näher an dem einen der Ränder (24a2, 24a3) des planaren Befestigungsabschnitts (24a) als der halben Abmessung des planaren Befestigungsabschnitts (24a) in einer Richtung senkrecht zu der Axialrichtung der Rohrleitung (20) mit dem planaren Befestigungsabschnitt (24a) verbunden ist.

5. Abgaberohrleitung (10) nach einem der Ansprüche 1 bis 4, wobei
der zylindrische Rohrabschnitt (22) entlang einer Linie senkrecht zu seiner Achse genommen einen kreisförmigen Querschnitt hat, und
der Flachrohrabschnitt (24) entlang einer Linie senkrecht zu seiner Achse genommen einen rechteckigen Querschnitt hat.

6. Abgaberohrleitung (10) nach einem der Ansprüche 1 bis 5, wobei die Abgaberohrleitung (10) eine gerade Achse hat.

7. Abgaberohrleitung (10) nach einem der Ansprüche 1 bis 6, wobei
das Einleitungsloch (40a1) des Verbindungsabschnitts (40a) der Ventilbefestigung (40) im Wesentlichen in einer Mitte des Verbindungsabschnitts (40a) positioniert ist,
das Verteilungsloch (24a1) des planaren Befestigungsabschnitts (24a) des Flachrohrabschnitts (24) benachbart zu dem einen der Ränder (24a2, 24a3) des planaren Befestigungsabschnitts (24a) positioniert ist, und
das Einleitungsloch (40a1) und das Verteilungsloch (24a1) koaxial angeordnet sind.

8. Abgaberohrleitung (10) nach einem der Ansprüche 1 bis 7, wobei das Verteilungsloch (24a1) einen Durchmesser hat, der im Wesentlichen gleich einem Durchmesser des Einleitungslochs (40a1) ist.

## Revendications

1. Tuyau de distribution (10) comprenant :
un tuyau (20) comprenant intégralement au moins une section de tube cylindrique (22) et au moins une section de tube plat (24), la section de tube plat (24) comprenant une partie de fixation planaire (24a) comprenant un orifice de distribution (24a1) qui s'étend au travers de la partie de fixation plane (24a) dans une direction d'épaisseur de celle-ci ; et
une fixation de soupape (40) comprenant une partie cylindrique creuse (40b) qui comporte une forme cylindrique creuse et une partie raccord (40a) de forme planaire, la partie cylindrique creuse (40b) ayant une exti-émité fermée qui est fermée par la partie raccord (40a) et conçue pour être rattachée à une soupape d'injection de carburant (60), la partie raccord (40a) comportant un orifice d'introduction (40a1) qui s'étend au travers de la partie raccord (40a) dans une direction d'épaisseur de celle-ci et qui communique avec l'orifice de distribution (24a1) de la partie de fixation planaire (24a), la fixation de soupape (40) étant raccordée à la partie de fixation planaire (24a) de la section de tube plat (24) à une position adjacente à l'un des bords (24a2, 24a3) de la partie de fixation planaire (24a), les bords (24a2, 24a3) de la partie de fixation planaire (24a) s'étendant le long d'une direction axiale du tuyau (20) ;
**caractérisé par**
un élément de montage (50) fixé à une surface extérieure de la section de tube cylindrique (22) sur un côté qui correspond à l'un des bords (24a2, 24a3) de la partie de fixation planaire (24a) adjacente à laquelle la fixation de soupape (40) est raccordée, l'élément de montage (50) étant conçu pour maintenir la section de tube cylindrique (22) dans une position fixe,
dans lequel
l'élément de montage (50) présente une forme cylindrique conçue pour s'étendre dans une direction parallèle à la direction axiale de la fixation de soupape (40).

2. Tuyau de distribution (10) selon la revendication 1, dans lequel
la section de tube plat (24) présente une dimension dans une direction perpendiculaire à la direction axiale du tuyau (20) le long de la partie de fixation (24a) qui est plus large qu'un diamètre de la section de tube cylindrique (22) de sorte que la section de tube plat (24) présente une partie saillante positionnée à l'extérieur de la surface extérieure de la section de tube cylindrique (22), et
la partie saillante chevauche au moins une partie de l'élément de montage (50) dans la direction axiale du tuyau (20).

3. Tuyau de distribution (10) selon la revendication 1 ou 2, dans lequel
la au moins une section de tube cylindrique (22) comprend une pluralité de sections de tube cylindrique (22) et la au moins une section de tube plat (24) comprend une pluralité de sections de tube plat (24),
le tuyau (20) comprend en alternance chacune des sections de tube cylindrique (22) et chacune des sections de tube plat (24), et
les sections de tube cylindrique (22) et les sections de tube plat (24) sont agencées de manière coaxiale.

4. Tuyau de distribution (10) selon l'une quelconque des revendications 1 à 3,
dans lequel la fixation de soupape (40) est raccordée à la partie de fixation planaire (24a) à une position plus proche de l'un des bords (24a2, 24a3) de la partie de fixation planaire (24a) que la moitié d'une dimension de la partie de fixation planaire (24a) dans une direction perpendiculaire à la direction axiale du tuyau (20).

5. Tuyau de distribution (10) selon l'une quelconque des revendications 1 à 4,
dans lequel
la section de tube cylindrique (22) possède une section transversale circulaire prise le long d'une ligne perpendiculaire à un axe de celle-ci, et
la section de tube plat (24) possède une section transversale rectangulaire le long d'une ligne perpendiculaire à un axe de celle-ci.

6. Tuyau de distribution (10) selon l'une quelconque des revendications 1 à 5,
dans lequel le tuyau de distribution (10) possède un axe rectiligne.

7. Tuyau de distribution (10) selon l'une quelconque des revendications 1 à 6,
dans lequel
l'orifice d'introduction (40a1) de la partie de raccordement (40a) de la fixation de soupape (40) est positionné à sensiblement un centre de la partie de raccordement (40a),
l'orifice de distribution (24a1) de la partie de fixation planaire (24a) de la section de tube plat (24) est positionné adjacent à l'un des bords (24a2, 24a3) de la partie de fixation planaire (24a), et
l'orifice d'introduction (40a1) et l'orifice de distribution (24a1) sont agencés de manière coaxiale.

8. Tuyau de distribution (10) selon l'une quelconque des revendications 1 à 7,
dans lequel l'orifice de distribution (24a1) possède un diamètre sensiblement égal au diamètre de l'orifice d'introduction (40a1).
